# EUROPÄISCHE PATENTSCHRIFT

(11) **EP 2 885 141 B1**
(45) Veröffentlichungstag und Bekanntmachung des Hinweises auf die Patenterteilung: **21.09.2016**
(21) Anmeldenummer: 13753135.6
(22) Anmeldetag: 15.08.2013
(51) Int. Cl.: B60C 23/04, H02N 2/18

(54) **REIFENMODUL MIT PIEZOELEKTRISCHEM WANDLER UND DAMIT AUSGESTATTETER REIFEN**
TYRE MODULE WITH PIEZOELECTRIC CONVERTOR AND PNEUMATIC TYRE USING THE SAME
MODULE DE PNEU À TRANSDUCTEUR PIÉZOÉLECTRIQUE ET PNEU AVEC CE MODULE

(30) Priorität: 17.08.2012 DE 102012107573; 06.11.2012 DE 102012110589
(43) Veröffentlichungstag der Anmeldung: 24.06.2015
(73) Patentinhaber: Huf Hülsbeck & Fürst GmbH & Co. KG, 42551 Velbert (DE)
(72) Erfinder: MÜLLER, Benjamin, 76185 Karlsruhe (DE); WOLF, Ingemar, 69509 Mörlenbach (DE); SEIFERT, Andre, 75181 Pforzheim (DE)
(74) Vertreter: Twelmeier Mommer & Partner
(86) Internationale Anmeldenummer: PCT/EP2013/067089
(87) Internationale Veröffentlichungsnummer: WO 2014/027067

(56) Entgegenhaltungen:
- DE-A1-102008 041 852
- DE-A1-102010 038 136

## Beschreibung

Die Erfindung betrifft eine Anordnung aus einem Reifenmodul zum Anbringen an der Innenseite eines Luftreifens für Fahrzeuge und aus einer Haube, welche das Reifenmodul aufnimmt, mit den im Oberbegriff der Ansprüche 1 oder 2 angegebenen Merkmalen. Eine solche Anordnung ist aus der DE 10 2008 035 498 A1 und aus der DE 10 2010 038 136 A1 bekannt.

Die in der DE 10 2010 038 136 A1 offenbarte Anordnung enthält ein Reifenmodul mit einer Einrichtung zum Messen und/oder Überwachen des Luftdrucks in dem Reifen, mit einem Sender zum Übertragen von Funksignalen, welche eine Information über den Luftdruck im Reifen enthalten, mit einem mechanisch-elektrischen Wandler, welcher vom rollenden Reifen verursachte wechselnde Formänderungen in elektrische Energie wandelt, und mit einem Speicher für die elektrische Energie. Der mechanisch-elektrische Wandler weist in dem bekannten Reifenmodul ein biegsames piezoelektrisches Element auf, welches sich auf einer dünnen, biegsamen Metallscheibe als Träger befindet. Als Speicher für die elektrische Energie offenbart die DE 10 2010 038 136 A1 einen Kondensator.

Eine Vergussmasse, in welche Bestandteile des Reifenmoduls ganz oder teilweise eingebettet sind, vervollständigt das Reifenmodul. Das Reifenmodul steckt in einer Haube, welche aus einem elastomeren Werkstoff besteht und einen Flansch hat, welcher den Rand des Innenraums der Haube bildet, sich vom Reifenmodul weg nach außen erstreckt und eine Öffnung zum Innenraum der Haube vollständig umgibt. In dem in der DE 10 2010 038 136 A1 offenbarten Ausführungsbeispiel sind die Haube und das Reifenmodul in der Draufsicht im Wesentlichen kreisförmig ausgebildet und der Innenraum der Haube ist im Wesentlichen kreiszylindrisch ausgebildet. Die Außenabmessungen des Reifenmoduls, zu welchem auch die Vergussmasse gehört, und die Innenabmessungen der Haube sind aufeinander abgestimmt, wobei das Reifenmodul, solange die Haube nicht an der Innenseite eines Reifens angebracht ist, vorzugsweise ein wenig aus der Haube nach unten vorsteht, so dass die Haube, nachdem sie mit ihrem Flansch an der Innenseite des Reifens befestigt ist, unter einer mechanischen Vorspannung steht. Das führt zu einer engen Kopplung des mechanisch-elektrischen Wandlers mit der Innenseite des Reifens.

Die Verbindung des Flansches der Haube mit der Innenseite des Reifens kann durch Kleben oder Vulkanisieren geschehen.

Bei dem bekannten Reifenmodul ist der mechanisch-elektrische Wandler mit seinem Träger unmittelbar an der Innenseite des Reifens angeordnet, so dass sich Verformungen der Innenseite des Reifens auf den mechanisch-elektrischen Wandler übertragen, der die an ihm auftretenden Formänderungen in elektrische Energie wandelt, die für den Betrieb der Mess- und Sendeeinrichtungen im Reifenmodul gespeichert wird. Diese Formänderungen werden periodisch jedesmal dann auf den mechanisch-elektrischen Wandler übertragen, wenn das Reifenmodul bei rollendem Reifen in dessen Latsch einläuft und wenn es den Latsch wieder verlässt. Der Latsch ist derjenige Teil des Reifens, der momentan Kontakt mit der Fahrbahn hat.

Es hat sich nun gezeigt, dass der Wirkungsgrad des bekannten mechanisch-elektrischen Wandlers mit zunehmender Betriebszeit abnehmen kann. Das ist nachteilig, weil damit die im Speicher verfügbare elektrische Energie abnimmt und die Zeitabstände zwischen Messvorgängen und zwischen Sendevorgängen länger werden, weil für häufigere Mess- und Sendevorgänge die erforderliche Energie fehlt. Das wiederum ist nachteilig, weil die laufende automatische Reifendruckkontrolle für die Sicherheit eines Fahrzeugs wichtig und umso besser ist, je häufiger die Reifendruckkontrolle durchgeführt und das Ergebnis per Funk übertragen werden kann.

Die DE 10 2008 041 852 A offenbart ein Generatormodul mit einem piezoelektrischen Element, welches durch eine auf Beschleunigungen reagierende seismische Masse verbogen werden kann und dadurch eine elektrische Spannung erzeugt, welche aus dem Gehäuse des Moduls herausgeführt und in einem Reifendruckkontrollsystem zur Energieversorgung verwendet werden kann. Eine Verformung des Reifens, an welchem das Modul angebracht sein kann, wird jedoch nicht auf das piezoelektrische Element übertragen.

Der vorliegenden Erfindung liegt die Aufgabe zugrunde, ein Absinken des Wirkungsgrades des mechanisch-elektrischen Wandlers in einer Anordnung der eingangs genannten Art nach Möglichkeit zu verhindern oder mindestens zu verlangsamen.

Diese Aufgabe wird durch eine Anordnung mit den im Patentanspruch 1 angegebenen Merkmalen gelöst. Eine auf der gleichen Erfindung beruhende Lösung der Aufgabe ist im Patentanspruch 2 angegeben. Ein Reifen mit einer daran befestigten erfindungsgemäßen Anordnung ist Gegenstand des Anspruchs 14. Vorteilhafte Weiterbildungen der Erfindung sind Gegenstand der Unteransprüche.

Gegenüber dem nächstliegenden Stand der Technik unterscheidet sich die erfindungsgemäße Anordnung dadurch, dass der Flansch der Haube einen einwärts gerichteten Fortsatz hat, der unter das Reifenmodul greift, dessen Unterseite zu diesem Zweck im Bereich des Fortsatzes des Flansches höher liegt als in einem mittleren Bereich der Unterseite des Reifenmoduls.

Diese verblüffend einfache Anordnung hat zur Folge, dass ein Absinken des Wirkungsgrades des mechanisch-elektrischen Wandlers in der erfindungsgemäßen Anordnung verlangsamt oder sogar verhindert wird.

Die Ankopplung des mechanisch-elektrischen Wandlers an die Innenseite des Reifens ist dauerhaft gut. Nach dem Verbinden des Flansches mit der Innenseite des Reifens, welches durch Kleben oder Vulkanisieren geschehen kann, liegt das Reifenmodul der Innenseite des Reifens an. Vorzugsweise drückt die Haube infolge einer in ihr herrschenden mechanischen Vorspannung das Reifenmodul dauerhaft gegen die Innenseite des Reifens. Der einwärts gerichtete Fortsatz des Flansches, welcher sich ein Stück weit zwischen der Unterseite des Reifenmoduls und der Innenseite des Reifens erstreckt, verhindert das nicht, weil an der Unterseite des Reifenmoduls im Bereich des Fortsatzes des Flansches ein Bereich geschaffen wurde, welcher höher liegt als in einem mittleren Bereich der Unterseite des Reifenmoduls. In diesem Zusammenhang sei klargestellt, dass die Begriffe Oberseite und Unterseite des Reifenmoduls so zu verstehen sind, dass die Unterseite des Reifenmoduls jene Seite ist, mit welcher er auf der Innenseite des Reifens zu liegen kommt. Die Oberseite ist die der Unterseite abgewandte Seite des Reifenmoduls, welche nach dem Befestigen des Reifenmoduls an der Innenseite des Reifens, im Bereich der Lauffläche des Reifens, zur Mittelachse des Reifens weist. Die Unterseite des Reifenmoduls ist jene Seite, die der Innenseite der Lauffläche des Reifens zugewandt ist. Entsprechend ist die Unterseite des Flansches jene Seite des Flansches, die mit der Innenseite des Reifens verbunden werden soll.

Wenn die Haube mit der Innenseite des Reifens verbunden ist, liegt die Unterseite des Reifenmoduls auf der Innenseite des Reifens, soweit sich nicht der einwärts gerichtete Fortsatz des Flansches zwischen der Unterseite des Reifenmoduls und der Innenseite des Reifens erstreckt, wozu die Unterseite des Reifenmoduls im Bereich des Fortsatzes des Flansches, also in einem Randbereich der Unterseite des Reifenmoduls, höher liegt als in dem mittleren Bereich der Unterseite des Reifenmoduls. Die Verbindung des Flansches der Haube mit der Innenseite des Reifens kann durch Kleben oder Vulkanisieren geschehen.

Vorzugsweise sind die Kontur des Fortsatzes des Flansches und die Kontur der Unterseite des Reifenmoduls in dem Bereich, in welchem der einwärts gerichtete Fortsatz des Flansches liegt, so aufeinander abgestimmt, dass dann, wenn der Flansch der Haube mit der Innenseite des Reifens verbunden ist, durch eine Vorspannung der Haube nicht nur der mittlere Bereich der Unterseite des Reifenmoduls gegen die Innenseite des Reifens gedrückt wird, sondern auch der Fortsatz des Flansches, indem das Reifenmodul mit einem Randbereich seiner Unterseite auf den Fortsatz drückt.

Der Flansch muss nicht unbedingt durch Kleben oder Vulkanisieren fest mit der Innenseite des Reifens verbunden werden. Vorzugsweise wird nicht nur der sich nach außen erstreckende Flansch fest mit der Innenseite des Reifens verbunden, sondern auf die gleiche Weise auch sein einwärts gerichteter Fortsatz. Bei Verwendung eines Klebstoffs werden der Flansch und sein Fortsatz auf ihrer Unterseite zweckmäßigerweise mit dem Klebstoff vorbeschichtet. Soll der Flansch durch Vulkanisieren mit der Innenseite des Reifens verbunden werden, kann das dadurch geschehen, dass man zwischen dem Flansch und der Innenseite des Reifens einen dünnen, flachen Gummiring vorsieht, welcher durch Vulkanisieren einerseits mit der Unterseite des Flansches und seines Fortsatzes und andererseits mit der Innenseite des Reifens, insbesondere mit der Innenseite der Lauffläche des Reifens, verbunden wird. Besonders geeignet ist ein Gummiring, der 0,3 mm bis 1,3 mm, vorzugsweise 0,4 mm bis 0,6 mm dick ist.

Besonders bevorzugt ist es, anstelle eines solchen flachen Gummiringes eine vollflächige Gummischeibe vorzusehen, welche durch Vulkanisieren einerseits mit der Unterseite des Flansches der Haube einschließlich seines einwärts gerichteten Fortsatzes und andererseits mit der Innenseite des Reifens, insbesondere mit der Innenseite der Lauffläche des Reifens, verbunden wird. Die Gummischeibe ist zweckmäßigerweise 0,3 mm bis 1,3 mm, vorzugsweise 0,4 mm bis 0,6 mm dick und hat vorzugsweise den gleichen Durchmesser wie der Flansch der Haube. Verglichen mit der Verwendung eines Gummiringes hat die Verwendung einer Gummischeibe den Vorteil, dass das Anbringen des Reifenmoduls am Reifen vereinfacht und Gummiabfall vermieden wird.

Der höher liegende Randbereich der Unterseite des Reifenmoduls erstreckt sich vorzugsweise über den gesamten Umfang des Reifenmoduls. Entsprechend erstreckt sich der Fortsatz des Flansches der Haube vorzugsweise über den gesamten inneren Umfang des Flansches, so dass sich eine Verbindung der Haube mit der Innenseite des Reifens ergibt, die überall am Umfang des Reifenmoduls gleich gut ist.

Besonders bevorzugt sind ein Reifenmodul und eine Haube für den Reifenmodul, welche in der Draufsicht eine im Wesentlichen kreisförmige Gestalt haben, mit einem im Wesentlichen zylindrischen oder konischen Mantel des Reifenmoduls und der Haube. Gestalt und Abmessungen des Reifenmoduls und der Haube sind vorzugsweise so aufeinander abgestimmt, dass die Haube das Reifenmodul spielfrei aufnimmt.

Damit die Haube nach der Befestigung an der Innenseite des Reifens möglichst lange unter mechanischer Vorspannung bleibt und das Reifenmodul gegen die Innenseite des Reifens drückt, sollte die Haube aus einem Werkstoff bestehen, welcher gedehnt werden kann und dabei eine Rückstellkraft entwickelt, aber nicht oder möglichst langsam kriecht oder ermüdet. Die Haube besteht deshalb vorzugsweise aus einem elastomeren Werkstoff. Bei dessen Auswahl sollte darauf geachtet werden, dass er einen mittleren Vernetzungsgrad aufweist. Bei einem zu hohen Vernetzungsgrad zeigen Polymerwerkstoffe statt eines elastomeren Verhaltens ein duroplastisches Verhalten. Bei zu niedrigem Vernetzungsgrad können die Elastomere für Zwecke der vorliegenden Erfindung zu weich werden. Geeignete Elastomere sind Naturkautschuk und daraus hergestellter Gummi, Ethylen-Propylen-Dien-Kautschuk (EPDM) und Butylkautschuk.

Vorzugsweise greift der Fortsatz des Flansches formschlüssig unter die Unterseite des Reifenmoduls. Der Formschluss wird verstärkt durch die bestimmungsgemäße Verbindung der Anordnung aus dem Reifenmodul und der Haube mit der Innenseite des Reifens.

Der Fortsatz des Flansches und der den Fortsatz aufnehmende Randbereich an der Unterseite des Reifenmoduls können stufenförmig ausgebildet sein. Eine solche Geometrie ergibt einen besonders guten Formschluss. Vorzugsweise wird der Fortsatz des Flansches jedoch so gestaltet, dass er sich bezüglich seiner Höhe in Richtung von außen nach innen stetig bis auf eine minimale Höhe verjüngt, wobei die minimale Höhe so klein wie technisch möglich sein kann. Ebenso kann der sich nach außen erstreckende Flansch im Vertikalschnitt stufenförmig gestaltet sein, es ist aber auch möglich, dem Flansch eine solche Form zu geben, dass die Wandstärke der zwischen der Oberseite und der Unterseite der Haube verlaufenden Wand von oben nach unten über eine wählbare Höhendifferenz stetig zunimmt, so dass die Dicke des Flansches in Richtung von innen nach außen stetig abnimmt. Eine derartige Ausbildung hat den Vorteil, dass Spitzen im Kraftverlauf in der elastomeren Haube verkleinert oder vermieden werden können.

Vorzugsweise hat das Reifenmodul als integralen Bestandteil eine Wanne, deren Boden die Unterseite des Reifenmoduls bildet und deren Wand so geformt ist, dass nach dem Anbringen des Reifenmoduls an der Innenseite des Reifens zwischen dieser und der Wanne ein Raum vorhanden ist, welcher den Fortsatz des Flansches aufnimmt.

Die Wanne nimmt die weiteren Bestandteile des Reifenmoduls einschließlich der Vergussmasse auf. Sie hat mehrere Vorteile: Sie kann zugleich als Gießform für das Vergießen des Reifenmoduls mit der Vergussmasse verwendet werden, das Reifenmodul hat nach dem Vergießen eine genau definierte Form und für die Wanne kann ein Material gewählt werden, welches auf der Innenseite des Reifens bzw. - wenn die Haube des Reifenmoduls unter Zwischenfügen einer Gummischeibe durch Vulkanisation mit der Innenseite des Reifens verbunden wurde - auf der Gummischeibe nicht haftet, sondern auf der Innenseite des Reifens bzw. auf der Gummischeibe bei den wechselnden Verformungen des Reifens gleiten kann. Vorzugsweise ist die Wanne aus einer Kunststofffolie geformt, z. B. durch Tiefziehen oder durch Warmumformen. Die Wanne soll einen Boden haben, der so dünn ist, dass er die Verformung des Reifens leicht mitmacht und auf den mechanisch-elektrischen Wandler überträgt, der in der Wanne vorzugsweise unmittelbar auf dem Boden der Wanne liegt.

Der mechanisch-elektrische Wandler ist vorzugsweise durch ein biegsames piezoelektrisches Element gebildet, welches auf eine dünne metallische Scheibe als Träger aufgebracht ist. Auch für die dünne metallische Scheibe gilt, dass sie so dünn sein soll, dass sie die Verformung des Reifens leicht mitmacht, so dass aufgrund des Piezoeffekts erzeugte elektrische Energie im Speicher des Reifenmoduls gespeichert werden kann, welche für das Betreiben der elektrischen Komponenten des Reifenmoduls, insbesondere für das Messen des Drucks und das Senden von Signalen, die eine Information über den Druck enthalten, benötigt wird. Bei dem Speicher kann es sich um einen Kondensator handeln.

Die im Anspruch 2 angegebene Lösung der Aufgabe der Erfindung unterscheidet sich von der im Anspruch 1 angegebenen Aufgabe lediglich darin, dass die lichte Höhe der Haube nicht kleiner, sondern gleich der von seiner Unterseite zu seiner Oberseite gemessenen Höhe des Reifenmoduls ist. Auch in diesem Fall wird ein Absinken des Wirkungsgrades des mechanisch-elektrischen Wandlers verlangsamt oder sogar verhindert.

Ausführungsbeispiele der Erfindung sind in den beigefügten Zeichnungen schematisch dargestellt.
- Figur 1: ist ein Vertikalschnitt durch eine Anordnung aus einem Reifenmodul und einer Haube, die auf der Innenseite eines Reifens befestigt ist, gemäß dem Stand der Technik.
- Figur 2: ist ein Vertikalschnitt entsprechend der Figur 1 durch eine erfindungsgemäße Anordnung,
- Figur 3: zeigt vergrößert ein Detail aus Figur 2,
- Figur 4: zeigt eine Abwandlung der Anordnung aus Figur 2, und
- Figur 5: zeigt eine zweite Abwandlung der Anordnung aus Figur 2 in einer Darstellung entsprechend der Figur 4.

Gleiche Teile und einander entsprechende Teile sind in den fünf Figuren mit übereinstimmenden Bezugszahlen bezeichnet.

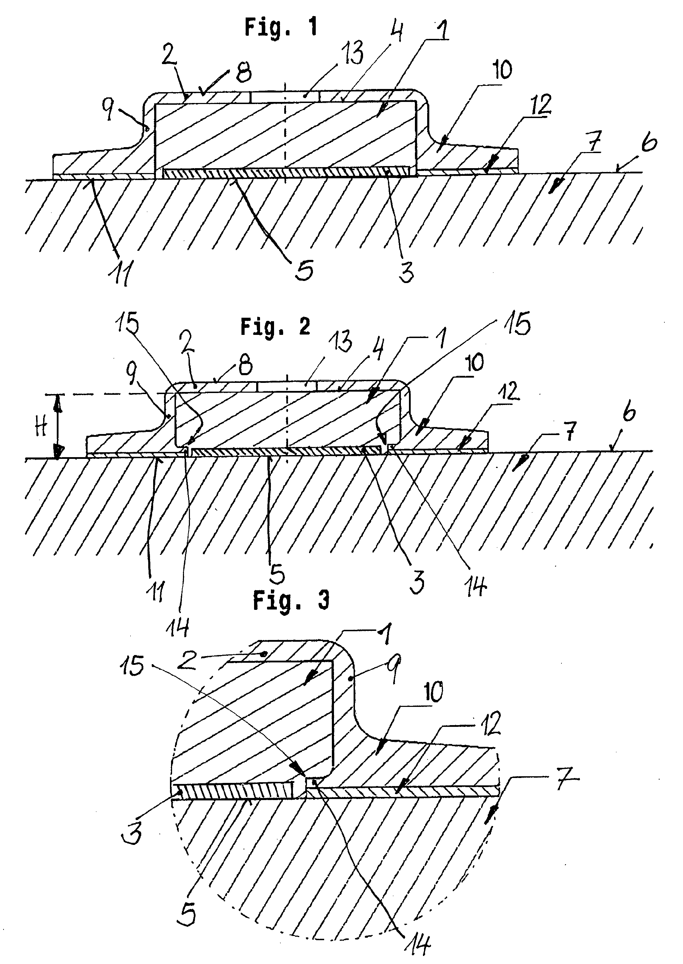

Figur 1 zeigt vergrößert und schematisch ein bekanntes, im Wesentlichen zylindrisches Reifenmodul 1 in einer Haube 2, welche das Reifenmodul 1 spielfrei aufnimmt. Das Reifenmodul 1 hat eine Oberseite 4 und eine Unterseite 5, welche in montiertem Zustand auf der Innenseite 6 der Lauffläche eines Reifens 7 liegt. Die Haube 2 hat ein Oberteil 8, welches auf der Oberseite 4 des Reifenmoduls 1 liegt, und einen im Wesentlichen zylindrischen Mantel 9, welcher das Reifenmodul 1 umgibt und in einen sich nach außen erstreckenden Flansch 10 übergeht, welcher eine der Innenseite 6 der Lauffläche des Reifens 7 zugewandte Unterseite 11 hat, welche mit der Innenseite 6 des Reifens 7 verklebt ist. Die Klebstoffschicht 12 ist stark übertrieben dick dargestellt.

Die Haube 2 besteht aus einem elastomeren Werkstoff. Ihre lichte unter Einschluss der Klebstoffschicht 12 gemessene Höhe ist um so viel kleiner als die Höhe H des Reifenmoduls 1, dass der Flansch 10 der Haube 2 nur dann vollflächig mit der Innenseite 6 des Reifens 7 verklebt werden kann, wenn die lichte Höhe der Haube 2 gummielastisch gedehnt wird, so dass die Haube 2 nach dem festen Verbinden mit der Innenseite 6 des Reifens 7 unter einer mechanischen Vorspannung steht, durch welche das Reifenmodul 1 gegen die Innenseite 6 des Reifens 7 gedrückt wird.

Die Befestigung der Haube 2 am Reifen 7 ist unabhängig davon, wie die Bestandteile des Reifenmoduls 1 im Einzelnen aufgebaut und angeordnet sind. Die Anordnung der Bestandteile im Reifenmodul 1 ist deshalb auch nicht im Einzelnen dargestellt. Der mechanisch-elektrische Wandler 3, der die elektrische Energie für das Betreiben des Reifenmoduls 1 liefern soll, soll jedoch so dicht wie möglich an der Innenseite 6 der Lauffläche des Reifens 7 liegen, damit die Verformungen der Innenseite 6 des Reifens 7 insbesondere zu Beginn und am Ende eines jeden Latschdurchlaufs gut auf den mechanisch-elektrischen Wandler 3 übertragen werden, dessen Lage in Figur 1 lediglich schematisch dargestellt ist. Eine Vergussmasse füllt Freiräume zwischen den sonstigen Bestandteilen des Reifenmoduls 1 aus und bestimmt überwiegend die äußere Kontur des Reifenmoduls 1.

Auf der Oberseite 4 hat die Haube 2 ein zentrales Loch 13, welches der im Reifen 7 unter Druck stehenden Luft einen Zugang zu einem Drucksensor in dem Reifenmodul 1 ermöglicht, damit der Luftdruck im Reifen 7 gemessen werden kann.

Das in Figur 2 dargestellte Ausführungsbeispiel der vorliegenden Erfindung unterscheidet sich von dem in Figur 1 dargestellten Stand der Technik darin, dass der Flansch 10 einen sich nach innen erstreckenden Fortsatz 14 hat, dessen Unterseite mit der Unterseite 11 des sich nach außen erstreckenden Flansches 10 fluchtet. Der Fortsatz 14 ist aber wesentlich niedriger als der Flansch 10. Der Fortsatz 14 ist stufenförmig ausgebildet und passt in eine entsprechende stufenförmige Ausnehmung 15 im Bereich des unteren Randes des Reifenmoduls 1. Auf diese Weise ist die Haube 2 von unten gesehen mit einem durch den Fortsatz 14 gebildeten Hinterschnitt versehen und das Reifenmodul 1 ist von oben gesehen mit einem entsprechenden durch die Ausnehmung 15 gebildeten Hinterschnitt versehen, wobei diese beiden Hinterschnitte miteinander einen Formschluss eingehen. Der Fortsatz 14 und die Ausnehmung 15 erstrecken sich über den gesamten Umfang des Reifenmoduls 1.

Versuche haben gezeigt, dass die erfindungsgemäße Anordnung aus einem Reifenmodul 1 und einer das Reifenmodul 1 aufnehmenden elastomeren Haube 2, welche nach dem Befestigen an der Innenseite 6 eines Reifens 7 unter mechanischer Vorspannung steht und das Reifenmodul 1 sowie den Fortsatz 14 des Flansches 10 gegen die Innenseite 6 des Reifens 7 drückt, hinsichtlich der Langzeitstabilität des Wirkungsgrades des an oder nahe bei der Unterseite 5 des Reifenmoduls 1 angeordneten mechanisch-elektrischen Wandlers 3 wesentlich besser verhält als der Stand der Technik gemäß Figur 1. Eine Erhöhung des Fortsatzes 14 bringt keine relevante Verbesserung der Langzeitstabilität. Das Befestigen der Haube 2 an der Innenseite 6 des Reifens 7 kann dadurch erfolgen, dass der Flansch 10 durch Kleben oder Vulkanisieren mit der Innenseite 6 des Reifens 7 verbunden wird. Beim Vulkanisieren tritt an die Stelle der Klebstoffschicht 12 vorzugsweise ein dünner flacher Ring aus Gummi.

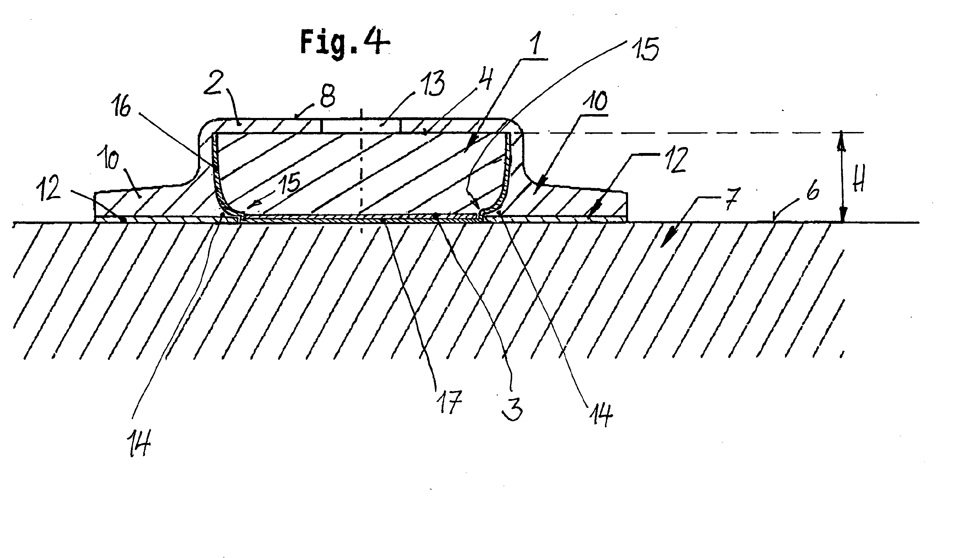

Das in Figur 4 dargestellte Ausführungsbeispiel unterscheidet sich von dem in Figur 2 und Figur 3 dargestellten Ausführungsbeispiel darin, dass das Reifenmodul 1 eine Wanne 16 hat, welche alle übrigen Bestandteile des Reifenmoduls 1 aufnimmt. Die Wanne 16 kann aus einer Kunststofffolie geformt sein, z. B. aus einem Polykarbonat. Ihr Boden 17 ist so dünn, dass er Verformungen der Lauffläche des Reifens 7, auf dessen Innenseite 6 der Boden 17 der Wanne 16 liegt, wenn das Reifenmodul 1 am Reifen 7 befestigt ist, problemlos mitmacht, damit Verformungen der Innenseite 6 des Reifens 7 auf den mechanisch-elektrischen Wandler 3 übertragen werden, was die Voraussetzung dafür ist, dass dieser elektrische Energie erzeugt, welche im Reifenmodul 1 für dessen Betrieb gespeichert werden kann. Die Wanne 16 wird nicht mit der Innenseite 6 des Reifens 7 verklebt. Im Gegenteil ist es so, dass der Boden 17 der Wanne 16 bei Verformungen des Reifens auf der Innenseite 6 des Reifens 7 gleiten kann, wozu es günstig ist, für die Wanne 16 ein Material zu wählen, welches gegenüber der vorgegebenen Innenseite 6 des Reifens 7 einen möglichst niedrigen Haftreibungskoeffizienten und Gleitreibungskoeffizienten aufweist. Eine solche Wanne 16 kann auch in anderen Ausführungsformen des erfindungsgemäßen Reifenmoduls verwendet werden, insbesondere auch in dem Ausführungsbeispiel gemäß den Figuren 2 und 3.

Das Ausführungsbeispiel der Figur 4 unterscheidet sich von dem Ausführungsbeispiel in Figur 2 weiterhin darin, dass der Fortsatz 14 des Flansches 10 nicht ausgeprägt stufenförmig ausgebildet ist, sondern bis zu seinem inneren Ende eine stetig abfallende Dicke aufweist. Das hilft, in der elastomeren Haube 2 ausgeprägte Spitzen im Kraftverlauf zu vermeiden.

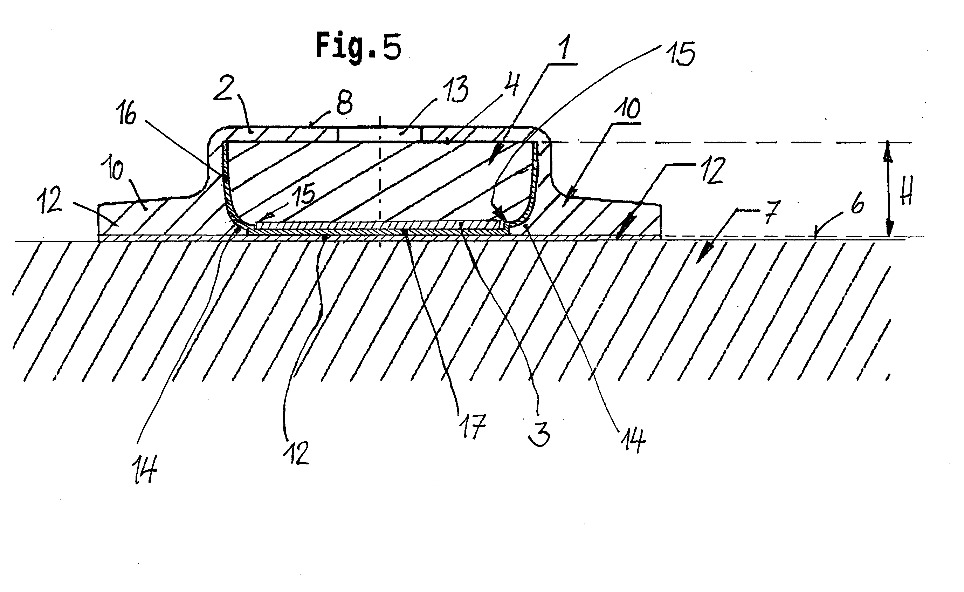

Das in Figur 5 dargestellte Ausführungsbeispiel gilt sowohl für den Fall, dass die lichte Höhe der Haube 2 kleiner ist als die Höhe des Reifenmoduls 1, als auch für den Fall, dass sie gleich der Höhe des Reifenmoduls 1 ist. Es unterscheidet sich von dem in Figur 4 dargestellten Ausführungsbeispiel darin, dass an die Stelle der ringförmigen Klebstoffschicht 12 bzw. an die Stelle des vulkanisierten, flachen Gummirings 12, welcher den Flansch 10 mit der Innenseite 6 des Reifens 7 verbindet, eine vollflächige Gummischeibe 12 getreten ist, welche durch Vulkanisieren einerseits mit der Innenseite 6 des Reifens 7 und andererseits mit dem Flansch 10 der Haube 2 verbunden ist. Die Gummischeibe 12 ist vorzugsweise 0,4 mm bis 0,6 mm dick und hat den gleichen Durchmesser wie der Flansch 10. Zum Vulkanisieren wird der Flansch 10 von oben mit Druck und Wärme beaufschlagt. Durch das Vulkanisieren verbindet sich die Gummischeibe 12 mit dem Flansch 10 und mit der Innenseite 6 des Reifens 7. Die Vernetzung der Gummischeibe 12 mit der Innenseite 6 des Reifens 7 erstreckt sich dabei nicht nur auf den Ringbereich unter dem Flansch 10, sondern auch auf den mittleren Bereich der Gummischeibe 12. Mit dem Boden 17 der Wanne 16 verbindet sich die Gummischeibe 12 jedoch nicht, so dass der Boden 17 bei Verformungen des Reifens 7 auf der Gummischeibe 12 gleiten kann. Um das zu ermöglichen, ist es günstig, für die Wanne 16 ein Material zu verwenden, welches gegenüber der Gummischeibe 12 einen möglichst niedrigen Haftreibungskoeffizienten und Gleitreibungskoeffizienten hat. Die Verwendung einer Gummischeibe 12 anstelle eines Gummirings vereinfacht das Anbringen des Reifenmoduls 1 am Reifen 7 und vermeidet Abfall.

Eine Gummischeibe 12 kann auch in einer Abwandlung des in Figur 2 dargestellten Beispiels verwendet werden, in welchem die Wanne 16 fehlt.

### Bezugszeichenliste

- 1.: Reifenmodul
- 2.: Haube
- 3.: mechanisch-elektrischer Wandler
- 4.: Oberseite des Reifenmoduls
- 5.: Unterseite des Reifenmoduls
- 6.: Innenseite des Reifens
- 7: Reifen
- 8.: Oberseite der Haube
- 9.: Mantel
- 10.: Flansch
- 11.: Unterseite des Flanschs
- 12.: Klebstoffschicht bzw. Gummiring oder Gummischeibe
- 13.: zentrales Loch
- 14.: Fortsatz
- 15.: stufenförmige Ausnehmung
- 16.: Wanne
- 17.: Boden der Wanne

- H: Höhe des Reifenmoduls

## Patentansprüche

1. Anordnung aus einem Reifenmodul (1) zum Anbringen an der Innenseite (6) eines Luft-Reifens (7) für Fahrzeuge und aus einer Haube (2), welche das Reifenmodul (1) aufnimmt,
wobei das Reifenmodul (1)
eine Oberseite (4) und eine Unterseite (5),
eine Einrichtung zum Messen und/oder Überwachen des Luftdrucks in dem Reifen (7),
einen Sender zum Übertragen von Funksignalen, welche eine Information über den Luftdruck im Reifen (7) enthalten,
einen mechanisch-elektrischen Wandler (3), welcher vom rollenden Reifen (7) verursachte Formänderungen des Wandlers (3) in elektrische Energie wandelt,
und einen Speicher für die elektrische Energie hat,
und wobei die Haube (2)
einen sich vom Reifenmodul (1) weg nach außen erstreckenden Flansch (10) mit einer Unterseite (11) zum Anbringen an der Innenseite (6) des Reifens (7) hat, welcher Flansch (10) den Rand des Innenraums der Haube (2) bildet, und die lichte Höhe der Haube (2) kleiner als die von seiner Unterseite (5) zu seiner Oberseite (4) gemessene Höhe (H) des Reifenmoduls (1) ist, so dass das Reifenmodul (1) über die Unterseite (11) des Flansches (10) der Haube (2) vorsteht,
**dadurch gekennzeichnet, dass** der Flansch (10) einen einwärts gerichteten Fortsatz (14) hat, der unter das Reifenmodul (1) greift, dessen Unterseite (5) zu diesem Zweck im Bereich des Fortsatzes (14) des Flansches (10) höher liegt als in einem mittleren Bereich der Unterseite (5) des Reifenmoduls (1).

2. Anordnung aus einem Reifenmodul (1) zum Anbringen an der Innenseite (6) eines Luft-Reifens (7) für Fahrzeuge und aus einer Haube (2), welche das Reifenmodul (1) aufnimmt,
wobei das Reifenmodul (1)
eine Oberseite (4) und eine Unterseite (5),
eine Einrichtung zum Messen und/oder Überwachen des Luftdrucks in dem Reifen (7),
einen Sender zum Übertragen von Funksignalen, welche eine Information über den Luftdruck im Reifen (7) enthalten,
einen mechanisch-elektrischen Wandler (3), welcher vom rollenden Reifen (7) verursachte Formänderungen des Wandlers (3) in elektrische Energie wandelt, und einen Speicher für die elektrische Energie hat,
und wobei die Haube (2)
einen sich vom Reifenmodul (1) weg nach außen erstreckenden Flansch (10) mit einer Unterseite (11) zum Anbringen an der Innenseite (6) des Reifens (7) hat, welcher Flansch (10) den Rand des Innenraums der Haube (2) bildet, und die lichte Höhe der Haube (2) gleich der von seiner Unterseite (5) zu seiner Oberseite (4) gemessenen Höhe (H) des Reifenmoduls (1) ist,
**dadurch gekennzeichnet, dass** der Flansch (10) einen einwärts gerichteten Fortsatz (14) hat, der unter das Reifenmodul (1) greift, dessen Unterseite (5) zu diesem Zweck im Bereich des Fortsatzes (14) des Flansches (10) höher liegt als in einem mittleren Bereich der Unterseite (5) des Reifenmoduls (1).

3. Anordnung nach Anspruch 1 oder 2, **dadurch gekennzeichnet, dass** sich der Fortsatz (14) und der höher liegende Bereich der Unterseite (5) des Reifenmoduls (1) über den gesamten inneren Umfang des Flansches (10) bzw. über den gesamten Umfang des Reifenmoduls (1) erstrecken.

4. Anordnung nach Anspruch 1, 2 oder 3, **dadurch gekennzeichnet, dass** der Fortsatz (14) formschlüssig unter das Reifenmodul (1) greift.

5. Anordnung nach einem der Ansprüche 1 bis 4, **dadurch gekennzeichnet, dass** der Fortsatz (14) und der den Fortsatz (14) aufnehmende Bereich des Reifenmoduls (1) stufenförmig ausgebildet sind.

6. Anordnung nach einem der Ansprüche 1 bis 4, **dadurch gekennzeichnet, dass** sich der Fortsatz (14) in Richtung von außen nach innen stetig bis auf eine minimale Höhe verjüngt.

7. Anordnung nach Anspruch 6, **dadurch gekennzeichnet, dass** sich der Fortsatz (14) stetig bis auf die minimale Höhe Null verjüngt.

8. Anordnung nach einem der vorstehenden Ansprüche, **dadurch gekennzeichnet, dass** die Haube (2) aus einem elastomeren Werkstoff besteht.

9. Anordnung nach einem der vorstehenden Ansprüche, **dadurch gekennzeichnet, dass** das Reifenmodul (1) als integralen Bestandteil eine Wanne (16) aufweist, welche die weiteren Bestandteile des Reifenmoduls (1) einschließlich der Vergussmasse aufnimmt und bevorzugt aus einer Kunststofffolie geformt ist.

10. Anordnung nach Anspruch 9, **dadurch gekennzeichnet, dass** die Wanne (16) einen Boden (17) hat, der so dünn ist, dass er die Verformung des Reifens (7) mitmacht und auf den mechanisch-elektrischen Wandler (3) überträgt, während dieser sich bei rollendem Reifen (7) an dessen Latsch vorbeibewegt.

11. Anordnung nach einem der vorstehenden Ansprüche, **dadurch gekennzeichnet, dass** der mechanisch-elektrische Wandler (3) ein biegsames piezoelektrisches Element aufweist.

12. Luft-Reifen für Fahrzeuge, an dessen Innenseite (7) eine Anordnung nach einem der vorstehenden Ansprüche befestigt ist, indem der Flansch (10) der Haube (2) mit der Innenseite (7) des Reifens (6) unmittelbar oder mittelbar verklebt oder durch Vulkanisation verbunden ist.

13. Luft-Reifen nach Anspruch 12, **dadurch gekennzeichnet, dass** der Flansch (10) der Haube (2) an der Innenseite (6) der Lauffläche des Reifens (7) befestigt ist.

14. Luft-Reifen nach Anspruch 12 oder 13, **dadurch gekennzeichnet, dass** sich zwischen der Haube (2) und der Innenseite (6) des Reifens (7) eine Gummischeibe (12) befindet, welche durch Vulkanisation einerseits mit dem Flansch (10) und andererseits mit der Innenseite (6) des Reifens (7) verbunden ist.

15. Luft-Reifen nach Anspruch 14, **dadurch gekennzeichnet, dass** die Gummischeibe (12) 0,4 mm bis 0,6 mm dick ist.

16. Luft-Reifen nach einem der Ansprüche 12 bis 15, **dadurch gekennzeichnet, dass** auch der einwärts gerichtete Fortsatz (14) des Flansches (10) mit der Innenseite (7) des Reifens (6) unmittelbar oder mittelbar verklebt oder durch Vulkanisation verbunden ist.

17. Luft-Reifen nach einem der Ansprüche 12 bis 16, **dadurch gekennzeichnet, dass** das Reifenmodul (1) auf den Fortsatz (14) des Flansches (10) drückt.

## Claims

1. An arrangement comprising a tire module (1) for attachment to the inner side (6) of a pneumatic tire (7) for vehicles, and a cover (2), which accommodates the tire module (1),
wherein the tire module (1) has
a top side (4) and an underside (5),
a device for measuring and/or monitoring the air pressure in the tire (7),
a transmitter for transmitting radio signals that contain information on the air pressure in the tire (7),
a mechanical-electrical transducer (3), which converts changes in the shape of the transducer (3) caused by the rolling tire (7) into electrical energy,
and an accumulator for the electrical energy,
and wherein the cover (2) comprises
a flange (10) which extends outwardly away from the tire module (1) and has an underside (11) for attachment to the inner side (6) of the tire (7), said flange (10) forming the edge of the interior space of the cover (2), and the inner height of the cover (2) is less than the height (H) of the tire module (1) measured from the underside (5) to the top side (4) thereof such that the tire module (1) projects beyond the underside (11) of the flange (10) of the cover (2),
**characterized in that** the flange (10) has an inwardly directed projection (14) which engages beneath the tire module (1), the underside (5) of which lies, for this purpose, higher up in the region of the projection (14) of the flange (10) than it does in a central region of the underside (5) of the tire module (1).

2. An arrangement comprising a tire module (1) for attachment to the inner side (6) of a pneumatic tire (7) for vehicles, and a cover (2), which accommodates the tire module (1),
wherein the tire module (1) has
a top side (4) and an underside (5),
a device for measuring and/or monitoring the air pressure in the tire (7),
a transmitter for transmitting radio signals that contain information on the air pressure in the tire (7),
a mechanical-electrical transducer (3), which converts changes in the shape of the transducer (3) caused by the rolling tire (7) into electrical energy,
and an accumulator for the electrical energy,
and wherein the cover (2) comprises
a flange (10) which extends outwardly away from the tire module (1) and has an underside (11) for attachment to the inner side (6) of the tire (7), said flange (10) forming the edge of the interior space of the cover (2), and the inner height of the cover (2) is equal to the height (H) of the tire module (1) measured from the underside (5) to the top side (4) thereof,
**characterized in that** the flange (10) has an inwardly directed projection (14) which engages beneath the tire module (1), the underside (5) of which lies, for this purpose, higher up in the region of the projection (14) of the flange (10) than it does in a central region of the underside (5) of the tire module (1).

3. The arrangement according to claim 1 or 2, **characterized in that** the projection (14) and the higher-up region of the underside (5) of the tire module (1) extend around the entire inner periphery of the flange (10) or around the entire periphery of the tire module (1), respectively.

4. The arrangement according to claim 1, 2 or 3, **characterized in that** the projection (14) engages beneath the tire module (1) in a form-fit manner.

5. The arrangement according to any one of the claims 1 to 4, **characterized in that** the projection (14) and the region of the tire module (1) accommodating the projection (14) have a stepped design.

6. The arrangement according to any one of the claims 1 to 4, **characterized in that** the projection (14) tapers continuously in a direction from the outside toward the inside to a minimum height.

7. The arrangement according to claim 6, **characterized in that** the projection (14) tapers continuously to a minimum height of zero.

8. The arrangement according to any one of the preceding claims, **characterized in that** the cover (2) consists of an elastomeric material.

9. The arrangement according to any one of the preceding claims, **characterized in that** the tire module (1) comprises a trough (16), as an integral component, which accommodates the further components of the tire module (1), including the casting compound, and is preferably formed from a plastic foil.

10. The arrangement according to claim 9, **characterized in that** the trough (16) has a bottom (17) that is so thin that it deforms along with the deformation of the tire (7) and transmits said deformation to the mechanical-electrical transducer (3) while said mechanical-electrical transducer passes the shuffle of the tire (7) when said tire is rolling.

11. The arrangement according to any one of the preceding claims, **characterized in that** the mechanical-electrical transducer (3) comprises a bendable piezoelectric element.

12. A pneumatic tire for vehicles, on the inner side (7) of which an arrangement according to any one of the preceding claims is fastened in that the flange (10) of the cover (2) is directly or indirectly connected to the inner side (7) of the tire (6) by adhesive bonding or by vulcanization.

13. The pneumatic tire according to claim 12, **characterized in that** the flange (10) of the cover (2) is fastened on the inner side (6) of the tread of the tire (7).

14. The pneumatic tire according to claim 12 or 13, **characterized in that** a rubber disc (12) is located between the cover (2) and the inner side (6) of the tire (7), which rubber disc is connected via vulcanization to the flange (10) on one side and, on the other side, to the inner side (6) of the tire (7).

15. The pneumatic tire according to claim 14, **characterized in that** the rubber disc (12) is 0.4 mm to 0.6 mm thick.

16. The pneumatic tire according to any one of the claims 12 to 15, **characterized in that** also the inwardly directly projection (14) of the flange (10) is directly or indirectly connected to the inner side (7) of the tire (6) by adhesive bonding or by vulcanization.

17. The pneumatic tire according to any one of the claims 12 to 16, **characterized in that** the tire module (1) presses onto the projection (14) of the flange (10).

## Revendications

1. Ensemble à base d'un module de pneu (1), pour une application sur la face intérieure (6) d'un pneu à air (7) pour des véhicules, et d'un capot (2), lequel abrite le module de pneu (1),
où le module de pneu (1) a
une face supérieure (4) et une face inférieure (5),
un équipement pour la mesure et/ou le contrôle de la pression de l'air dans le pneu (7),
un émetteur pour la transmission de signaux radio, lesquels contiennent une information concernant la pression d'air dans le pneu (7),
un convertisseur mécanique-électrique (3), lequel transforme les variations de forme du convertisseur (3) occasionnées par le pneu (7) en rotation en énergie électrique, et un accumulateur pour l'énergie électrique,
et où le capot (2)
a une patte (10) s'étendant vers l'extérieur hors du module de pneu (1) avec une face inférieure (11) pour la mise en place sur la face intérieure (6) du pneu (7), laquelle patte (10) forme le bord de l'espace intérieur du capot (2) et la hauteur dégagée du capot (2) est inférieure à la hauteur (H) du module de pneu (1) mesurée entre sa face inférieure (5) et sa face supérieure (4), de sorte que le module de pneu (1) dépasse du capot (2) par l'intermédiaire de la face inférieure (11) de la patte (10),
**caractérisé en ce que** la patte (10) a une partie en saillie (14) orientée vers l'intérieur, qui
est en prise en dessous du module de pneu (1), dont la face inférieure (5) est située, pour cette raison, plus haut dans la région de la partie en saillie (14) de la patte (10) qu'une région centrale de la face inférieure (5) du module de pneu (1).

2. Ensemble à base d'un module de pneu (1), pour une application sur la face intérieure (6) d'un pneu à air (7) pour des véhicules, et d'un capot (2), lequel abrite le module de pneu (1),
où le module de pneu (1) a
une face supérieure (4) et une face inférieure (5),
un équipement pour la mesure et/ou le contrôle de la pression de l'air dans le pneu (7),
un émetteur pour la transmission de signaux radio, lesquels contiennent une information concernant la pression d'air dans le pneu (7),
un convertisseur mécanique-électrique (3), lequel transforme les variations de forme du convertisseur (3) occasionnées par le pneu (7) en rotation en énergie électrique,
et un accumulateur pour l'énergie électrique,
et où le capot (2)
a une patte (10) s'étendant vers l'extérieur hors du module de pneu (1) avec une face inférieure (11) pour la mise en place sur la face intérieure (6) du pneu (7), laquelle patte (10) forme le bord de l'espace intérieur du capot (2) et la hauteur dégagée du capot (2) est identique à la hauteur (H) du module de pneu (1) mesurée entre sa face inférieure (5) et sa face supérieure (4),
**caractérisé en ce que** la patte (10) a une partie en saillie (14) orientée vers l'intérieur, qui
est en prise en dessous du module de pneu (1), dont la face inférieure (5) est située, pour cette raison, plus haut dans la région de la partie en saillie (14) de la patte (10) que dans une région centrale de la face inférieure (5) du module de pneu (1).

3. Ensemble selon la revendication 1, ou 2, **caractérisé en ce que** la partie en saillie (14) et la région située plus haut de la face inférieure (5) du module de pneu (1) s'étendent sur le périmètre intérieur complet de la patte (10), respectivement sur le périmètre complet du module de pneu (1).

4. Ensemble selon les revendications 1, 2 ou3, **caractérisé en ce que** la partie en saillie (14) est en prise sous le module de pneu (1) par complémentarité des formes.

5. Ensemble selon l'une des revendications 1 à 4, **caractérisé en ce que** la partie en saillie (14) et la région recevant la partie en saillie (14) du module de pneu (1) sont conçues en forme de marche d'escalier.

6. Ensemble selon l'une des revendications 1 à 4, **caractérisé en ce que** la partie en saillie (14) s'amenuise de manière continue dans une direction allant de l'extérieur vers l'intérieur jusqu'à une hauteur minimale.

7. Ensemble selon la revendication 6, **caractérisé en ce que** la partie en saillie (14) s'amenuise de manière continue jusqu'à la hauteur minimale de zéro.

8. Ensemble selon l'une des revendications précédentes, **caractérisé en ce que** le capot (2) est constitué d'un matériau élastomère.

9. Ensemble selon l'une des revendications précédentes, **caractérisé en ce que** le module de pneu (1) présente une cuvette (16) en tant que composant intégral, laquelle contient les autres constituants du module de pneu (1), y compris la masse de scellement et est de préférence formée dans une feuille en matière plastique.

10. Ensemble selon la revendication 9, **caractérisé en ce que** la cuvette (16)) a un fond (17) qui est si fin qu'il accompagne la déformation du pneu (7) et la transmet au convertisseur mécanique-électrique (3) pendant que celui-ci passe à côté de la patte du pneu (7) en rotation.

11. Ensemble selon l'une des revendications précédentes, **caractérisé en ce que** le convertisseur mécanique-électrique (3) présente un élément piézoélectrique pliable.

12. Pneu à air pour véhicules, un ensemble selon l'une des revendications précédentes est fixé sur sa face intérieure (7), par le fait que la patte (10) du capot (2) est collée directement ou indirectement avec la face intérieure (7) du pneu (6) ou est relié par une vulcanisation.

13. Pneu à air selon la revendication 12, **caractérisé en ce que** la patte (10) du capot (2) est fixée sur la face intérieure (6) de la surface de roulement du pneu (7).

14. Pneu à air selon la revendication 12, ou 13, **caractérisé en ce qu'**entre le capot(2) et la face intérieure (6) du pneu (7), il y a un disque en caoutchouc (12), lequel est relié par vulcanisation d'une part, avec la patte (10), et d'autre part avec la face intérieure (6) du pneu (7).

15. Pneu à air selon la revendication 14, **caractérisé en ce que** le disque en caoutchouc (12) a une épaisseur de 0,4 mm à 0,6 mm.

16. Pneu à air selon l'une des revendications 12 à 15, **caractérisé en ce qu'**également la partie en saillie (14) de la patte (10) orientée vers l'intérieur est collée directement ou indirectement avec la face intérieure (7) du pneu (6) ou est reliée par vulcanisation.

17. Pneu à air selon l'une des revendications 12 à 16, **caractérisé en ce que** le module de pneu (1) appuie sur la partie en saillie (14) de la patte (10).
